# EUROPÄISCHE PATENTSCHRIFT

(11) **EP 0 832 774 B1**
(45) Veröffentlichungstag und Bekanntmachung des Hinweises auf die Patenterteilung: **26.04.2000**
(21) Anmeldenummer: 97116015.5
(22) Anmeldetag: 15.09.1997
(51) Int. Cl.: B60J 1/18

(54) **Dachkonstruktion für einen offenen Personenkraftwagen**
Roof structure for convertible vehicle
Structure de toit pour véhicule convertible

(30) Priorität: 26.09.1996 DE 19639567
(43) Veröffentlichungstag der Anmeldung: 01.04.1998
(73) Patentinhaber: DaimlerChrysler AG, 70567 Stuttgart (DE)
(72) Erfinder: Klein, Berthold, 71277 Rutesheim (DE)

(56) Entgegenhaltungen:
- DE-A- 3 416 285
- GB-A- 2 240 519
- US-A- 2 836 457
- US-A- 4 784 428

## Beschreibung

Die Erfindung betrifft eine Dachkonstruktion für einen offenen Personenkraftwagen mit einem schwenkbar an der Fahrzeugkarosserie gelagerten und eine integrierte Heckscheibe aufweisenden Heckteil sowie einem an dem Heckteil angelenkten und über eine gemeinsame Bewegungskinematik zusammen mit dem Heckteil in einen Aufnahmeraum der Fahrzeugkarosserie absenkbaren Dachteil, wobei der Heckteil als formstabiles Bauteil, das zwei die Heckscheibe seitlich flankierende C-Säulenteile bildet, gestaltet ist, und wobei der Dachteil als Faltverdeckeinheit ausgebildet ist, die sich am Heckteil abstützt und im aufgespannten Zustand an einem Windschutzscheibenrahmen der Fahrzeugkarosserie festlegbar ist.

Eine derartige Dachkonstruktion für einen offenen Personenkraftwagen ist aus der DE-GM 16 95 169 bekannt. Dabei bildet eine steife Blechkonstruktion, die schwenkbar an der Kraftfahrzeugkarosserie befestigt ist, bei geschlossenem Verdeck einen Heckteil des Kraftfahrzeuginnenraumes sowie eine Aufnahme für die Heckfensterscheibe des Kraftfahrzeuges. Ferner ist ein als Stoffverdeck gestalteter Dachteil vorgesehen, der an dem steifen Heckteil befestigt ist und mit Hilfe mehrerer quer angeordneter Stützspriegel in der Breite gespannt ist. Bei geschlossenem Verdeck ist der Heckteil aus der Karosserie heraus verschwenkt und aufgestellt, der Dachteil ist entfaltet und über den Kraftfahrzeuginsassenraum gespannt, indem er im Bereich der Windschutzscheibe fixiert ist.

Eine zweiteilige Dachkonstruktion für einen offenen Personenkraftwagen ist durch den Mercedes SLK-Roadster bekannt. Die Dachkonstruktion weist zwei schwenkbeweglich miteinander verbundene Hartschalen auf, von denen die eine als Dachteil und die andere als Heckteil gestaltet sind. Dachteil und Heckteil sind in Wagenfarbe lackiert. Im Heckteil ist eine Heckscheibe integriert. Die beiden Teile der Dachkonstruktion sind in einen Aufnahmeraum im Heck des Fahrzeugs in einem zusammengeklappten Zustand absenkbar.

Es ist auch ein Faltverdeck für einen offenen Personenkraftwagen bekannt (DE-AS 1 179 125), das eine mit einem Verdeckstoff überzogene Tragkonstruktion aufweist. An der Tragkonstruktion ist im Heckbereich des Faltverdecks eine in einem stabilen Rahmen gehaltene Heckscheibe mittels eines Hebelgestänges gelagert, die zum Absenken des Faltverdeckes in seine den Fahrgastraum freigebende Position zu den seitlichen Trägerstangen der Tragkonstruktion hin verlagerbar und gemeinsam mit der Tragkonstruktion absenkbar ist. Durch die Halterung der Heckscheibe in einem stabilen, mittels eines eigenen Hebelgestänges an der Tragkonstruktion gelagerten Rahmen ist es möglich, die Heckscheibe relativ großflächig zu gestalten. Die Mittel zur Halterung des die Heckscheibe tragenden Rahmens sind jedoch relativ aufwendig gestaltet.

Aufgabe der Erfindung ist es, eine Dachkonstruktion der eingangs genannten Art zu schaffen, die auch im geschlossenen Zustand einen hellen Fahrgastraum gewährleistet.

Diese Aufgabe wird erfindungsgemäß dadurch gelöst, daß der Heckteil einschließlich der die Heckscheibe seitlich flankierenden C-Säulenteile zumindest im wesentlichen aus einem transparenten Material gestaltet ist. Durch die erfindungsgemäße Lösung erfährt der Fahrgastraum auch im geschlossenen Zustand der Dachkonstruktion eine große Helligkeit. Die Sicht des Fahrers nach hinten wird gegenüber bekannten Verdeckkonstruktionen erheblich verbessert, da keine toten Bereiche auf Höhe der C-Säulenabschnitte mehr vorhanden sind, die bei bekannten Stoffverdeckkonstruktionen zu erheblichen Sichtmängeln führen konnten. Der Heckteil kann auch tragende Rahmenelemente aus nicht transparenten, formstabilen Werkstoffen aufweisen, die jedoch im Vergleich zu den großen transparenten Sichtflächen des Heckteiles so angeordnet sind, daß sie das Sichtfeld nach hinten nicht beeinträchtigen. Bei der erfindungsgemäßen Lösung bildet der Heckteil die Stütz- und Tragfunktion für den Dachteil, nämlich die Faltverdeckeinheit. Durch die Gestaltung des Heckteiles als formstabiles Bauteil kann der Aufbau der Faltverdeckeinheit gegenüber bekannten Vollverdeckeinheiten vereinfacht werden. Der formstabile Bauteil ist wesentlich pflegeleichter und robuster als eine Vollverdeckeinheit, die sich auch über den Heckbereich der Dachkonstruktion nach unten zieht. Die Gestaltung des Dachteiles als Faltverdeckeinheit gewährleistet, daß der Dachteil im offenen Zustand des Fahrgastraumes relativ kompakt zusammen mit dem Heckteil absenkbar ist und so einen gegenüber einer zweiteiligen Hardtopkonstruktion erheblich verringerten Aufnahmeraum im Heck des Personenkraftwagens benötigt. Die gemeinsame Bewegungskinematik für die Faltverdeckeinheit und das die Heckscheibe darstellende heckseitige Bauteil gewährleistet ein einfaches Öffnen und Schließen der Dachkonstruktion mit geringem Aufwand und geringen steuerungstechnischen Maßnahmen. Besonders charakteristisch für die erfindungsgemäße Lösung ist, daß der Heckteil nahezu vollständig aus einem transparenten Material hergestellt ist.

In Ausgestaltung der Erfindung gemäß Anspruch 2 ist der Heckteil mit angesetzten Rahmenteilen zur Anlenkung und Lagerung der Faltverdeckeinheit sowie zur Festlegung eines Verdeckbezuges der Faltverdeckeinheit versehen. Die Rahmenteile sind vorteilhaft lösbar an dem Heckteil festgelegt, so daß sie im montierten Zustand zusammen mit dem Heckteil eine einstückige Baueinheit bilden.

Nachfolgend ist ein bevorzugtes Ausführungsbeispiel der Erfindung beschrieben und anhand der Zeichnungen dargestellt.
- Fig. 1: zeigt schematisch eine Seitenansicht eines offenen Personenkraftwagens mit einer Ausführungsform einer erfindungsgemäßen Dachkonstruktion, und
- Fig. 2: einen Bereich des Personenkraftwagens nach Fig. 1 auf Höhe der Dachkonstruktion in gegenüber Fig. 1 vergrößerter Darstellung.

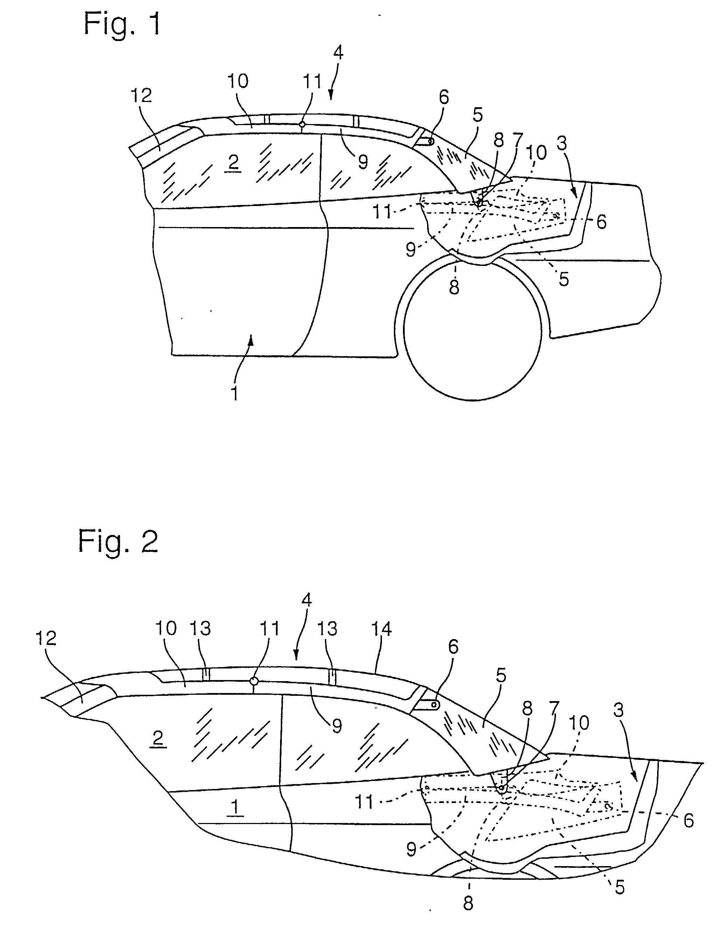

Ein offener Personenkraftwagen (1) nach den Fig. 1 und 2 stellt ein viersitziges Cariolet dar. Ein Fahrgastraum (2) des Personenkraftwagens (1) ist gegen Überschläge zum einen durch einen stabilen Windschutzscheibenrahmen (12) und zum anderen durch einen nicht dargestellten, in einer Gefahrensituation schlagartig aufstellbaren Überrollschutz im Fondbereich des Fahrgastraumes (2) gesichert. Zum Schließen des Fahrgastraumes (2) weist der offene Personenkraftwagen (1) eine Dachkonstruktion (4, 5) auf, die aus einem Dachteil (4) und einem Heckteil (5) zusammengesetzt ist. Der Heckteil (5) ist in nachfolgend näher beschriebener Weise als Hardtopteil, der Dachteil (4) hingegen als Softtopteil ausgebildet. Der Heckteil (5) ist als einstückiges, starres Bauteil aus einem transparenten Material, beim dargestellten Ausführungsbeispiel aus einem Verbundglas, hergestellt. Bei einem nicht dargestellten Ausführungsbeispiel der Erfindung ist der Heckteil (5) aus einem transparenten und hochstabilen Kunststoff, insbesondere einem Verbundwerkstoff, hergestellt. Bei weiteren, nicht dargestellten Ausführungsbeispielen der Erfindung ist der Heckteil nicht vollständig aus einem transparenten Material hergestellt, sondern weist tragende Rahmenelemente aus metallischen oder anderen formstabilen, nicht transparenten Werkstoffen auf. Der Heckteil (5) erstreckt sich über die gesamte Breite der Dachkonstruktion (4, 5) und weist rückseitig die eigentliche Heckscheibe auf. Zu den Seiten hin ist die Heckscheibe gekrümmt oder abgewinkelt und bildet auf jeder Seite jeweils einen C-Säulenträger, so daß sich insgesamt für den Heckteil (5) eine schalenartige Bauform ergibt. Im Bereich der als C-Säulenteile dienenden C-Säulenträger ist der Heckteil (5) an seiner Unterseite mit jeweils einem stabilen Trägerbock (8) versehen, wobei die beiden Trägerböcke (8) auf jeder Seite des Heckteiles (5) den Heckteil (5) um eine horizontale, quer zur Fahrzeuglängsrichtung verlaufende Schwenkachse (7) in seitlichen Karosserieteilen der Fahrzeugkarosserie schwenkbeweglich lagern.

Zur Aufnahme der Dachkonstruktion (4, 5) ist in einem Heckabschnitt der Fahrzeugkarosserie des Personenkraftwagens (1) ein kastenförmiger Aufnahmeraum (3) vorgesehen, der durch einen Dekkel verschließbar ist.

In einem oberen Randbereich des Heckteiles (5) sind Lagerpunkte (6) für die schwenkbewegliche Anlenkung des Dachteiles (4) vorgesehen. Der Dachteil (4) ist als Faltverdeckeinheit gestaltet und weist eine klappbare Tragbügelkonstruktion (9, 10) auf, die mit Hilfe von Stoffhaltebügeln (13) sowie nicht näher dargestellten Spriegeln einen Stoffbezug (14) der Faltverdeckeinheit aufspannen oder zusammenfalten. Die Tragbügelkonstruktion (9, 10) der Faltverdeckeinheit (4) weist zwei einen hinteren Teil des Dachrahmens bildende Träger (9) auf, die rückseitig in den Lagerpunkten (6) des Heckteiles (5) gelagert sind. An ihren vorderen Stirnenden sind die Träger (9) mit Hilfe von Gelenkpunkten (11) mit einem Tragbügel (10) verbunden, der an den Windschutzscheibenrahmen (12) anschließt und sich über die gesamte Breite des Windschutzscheibenrahmens (12) erstreckt.

Der Heckteil (5) ist zwischen einer in den Fig. 1 und 2 dargestellten geschlossenen Position und einer ebenfalls in den Fig. 1 und 2 dargestellten offenen Position verschwenkbar. In der offenen Position ist der Heckteil (5) im Aufnahmeraum (3) abgesenkt. In der geschlossenen Position dient der Heckteil (5) als stabile Stütze zum Aufspannen der Faltverdeckeinheit (4), die mit Hilfe entsprechender Verriegelungen in ihrer geschlossenen Position am Windschutzscheibenrahmen (12) festgelegt wird. In der offenen Position (Fig. 1 und 2) wird die Faltverdeckeinheit (4) zusammengeklappt, wobei sie zwischen den schalenartig nach oben ragenden C-Säulenträgern des Heckteiles (5) in den Heckteil (5) ablegbar ist. Da die Faltverdeckeinheit (4) um die Achse der Gelenkpunkte (11) etwa auf die Hälfte ihrer Länge zusammenlegbar ist, überragt die zusammengelegte Faltverdeckeinheit (4) den Heckteil (5) lediglich geringfügig in der Länge.

Der Heckteil (5) bildet im abgesenkten Zustand eine Aufnahmeschale für die Faltverdeckeinheit (4), da er derart in seine abgesenkte Position verschwenkt wird, daß die seitlichen C-Säulenträger nach oben ragen. Die Tragbügelkonstruktion (9, 10) sowie der Heckteil (5) sind einander derart zugeordnet, daß sie mittels einer gemeinsamen Bewegungskinematik in die abgesenkte offene Position des Fahrgastraumes (2) zusammenlegbar und analog auch wieder in die den Fahrgastraum (2) überspannende geschlossene Position überführbar sind. Die Tragbügelkonstruktion (9, 10) spannt den Stoffbezug (14) mittels eines Kniehebelprinzips, wobei sie sich an dem stabil positionierten Heckteil (5) abstützt. Selbstverständlich ist die Spannung des Stoffbezuges mittels des Kniehebelprinzips lediglich eine spezielle erfindungsgemäße Ausgestaltung. Die Tragbügelkonstruktion kann jedoch auch andere Spannanordnungen aufweisen oder aber derart gestaltet sein, daß keine spzielle Spannanordnung benötigt wird.

Die Dachkonstruktion ist handhabbar wie ein an sich bekanntes Faltverdeck. Nach dem Entriegeln der Faltverdeckeinheit (4) im Bereich des Windschutzscheibenrahmens (12) wird der Tragbügel (10) der Faltverdeckeinheit (4) in einfacher Weise nach hinten geklappt. Nach dem Öffnen des Verdeckkastendeckels wird die gesamte Dachkonstruktion in den Aufnahmeraum (3) abgelegt, wobei sie sich in der dargestellten Weise zusammenlegt. Falls ein entsprechender Deckel für den Aufnahmeraum (3) durch den Heckteil (5) in seiner Beweglichkeit nicht behindert ist, so kann dieser Deckel unabhängig von der erreichten Position der Dachkonstruktion (4, 5) geöffnet werden und die Dachkonstruktion (4, 5) nach dem Entriegeln im Bereich des Windschutzscheibenrahmens (12) in den Aufnahmeraum (3) abgesenkt werden. Das Öffnen und erneute Schließen der Dachkonstruktion (4, 5) kann entweder durch manuelle Bedienung oder aber auch durch entsprechende Antriebe erfolgen.

## Patentansprüche

1. Dachkonstruktion für einen offenen Personenkraftwagen (1) mit einem schwenkbar an der Fahrzeugkarosserie gelagerten und eine integrierte Heckscheibe aufweisenden Heckteil (5) sowie einem an dem Heckteil angelenkten und über eine gemeinsame Bewegungskinematik zusammen mit dem Heckteil (5) in einen Aufnahmeraum der Fahrzeugkarosserie absenkbaren Dachteil (4), wobei der Heckteil (5) als formstabiles Bauteil, das zwei die Heckscheibe seitlich flankierende C-Säulenteile bildet, gestaltet ist, und wobei der Dachteil (4) als Faltverdeckeinheit ausgebildet ist, die sich am Heckteil (5) abstützt und im aufgespannten Zustand an einem Windschutzscheibenrahmen (12) der Fahrzeugkarosserie festlegbar ist,
**dadurch gekennzeichnet,**
daß der Heckteil (5) einschließlich der die Heckscheibe seitlich flankierenden C-Säulenteile zumindest im wesentlichen aus einem transparenten Material gestaltet ist.

2. Dachkonstruktion nach Anspruch 1,
**dadurch gekennzeichnet,**
daß der Heckteil (5) mit angesetzten Rahmenteilen zur Anlenkung und Lagerung der Faltverdeckeinheit sowie zur Festlegung eines Verdeckbezuges der Faltverdeckeinheit versehen ist.

## Claims

1. A roof structure for an open passenger car (1) with a rear section (5) which is located on the body shell of the vehicle in such a way that it can pivot and has an integrated rear window, and a roof section which is connected to the rear section and can be lowered together with the rear section into a receiving space in the vehicle body shell by means of a common kinematic movement, with the rear section (5) being designed as a dimensionally stable component which forms two C-pillar sections, one on either side of the rear window, and the roof section (4) being designed as a folding top unit which is supported on the rear section (5) and when extended can be fixed to a windscreen frame on the body shell of the vehicle,
characterised in that
the rear section (5) including the C-pillar sections on either side of the rear window is made in essence at least of a transparent material.

2. A roof structure in accordance with Claim 1,
characterised in that
the rear section (5) is provided with added frame parts to link and locate the folding top unit and to fix a top cover on the folding top unit.

## Revendications

1. Construction de toit pour une voiture de tourisme (1) ouverte, comprenant une partie arrière (5) montée basculante sur la carrosserie du véhicule et présentant une lunette arrière intégrée, ainsi qu'une partie toit (4) articulée sur la partie arrière et escamotable, ensemble avec la partie arrière (5), par un système cinématique commun, dans un espace récepteur de la carrosserie du véhicule, la partie arrière (5) étant réalisée comme un composant de forme stable, qui forme deux parties situées latéralement de part et d'autre de la lunette arrière et constituant des colonnes C, et la partie toit (4) étant réalisée comme une unité formant capote pliante, qui s'appuie sur la partie arrière (5) et peut être fixée, à l'état tendu, à un encadrement de pare-brise (12) de la carrosserie du véhicule, caractérisée en ce que la partie arrière (5), y compris les parties situées latéralement de part et d'autre de la lunette arrière et constituant des colonnes C, est réalisée au moins pour l'essentiel d'un matériau transparent.

2. Construction de toit selon la revendication 1, caractérisée en ce que la partie arrière (5) est pourvue de parties de cadre rapportées pour l'attache articulée et le montage de l'unité formant capote pliante, ainsi que pour la fixation d'un recouvrement formant capote de cette unité.
